# EUROPEAN PATENT SPECIFICATION

(11) **EP 0 869 424 B1**
(45) Date of publication and mention of the grant of the patent: **20.08.2003**
(21) Application number: 98105730.0
(22) Date of filing: 30.03.1998
(51) Int. Cl.: G06F 3/033, G06F 3/023

(54) **Contrast adjustment method and information processing apparatus having touch-sensitive device**
Kontrasteinstellungsverfahren und Datenverarbeitungsgerät mit berührungsempfindlicher Vorrichtung
Méthode de réglage de contraste et appareil de traitement de données avec un dispositif à touche sensitive

(30) Priority: 31.03.1997 JP 8084597
(43) Date of publication of application: 07.10.1998
(73) Proprietor: NEC CORPORATION, Tokyo (JP)
(72) Inventor: Takaya, Kei, Kakegawa-shi, Shizuoka (JP)
(74) Representative: Baronetzky, Klaus, Dipl.-Ing.

(56) References cited:
- WO-A-94/12971
- PATENT ABSTRACTS OF JAPAN vol. 097, no. 003, 31 March 1997 & JP 08 305497 A (CASIO COMPUT CO LTD), 22 November 1996
- PATENT ABSTRACTS OF JAPAN vol. 018, no. 614 (P-1830), 22 November 1994 & JP 06 231080 A (SEIKO EPSON CORP), 19 August 1994

## Description

The present invention generally relates to information processing equipment having a display and a touch-sensitive input device and, in particular, to contrast adjustment of the display through the touch-sensitive input device.

A touch-sensitive pointing device such as touch-sensitive pad, touch-sensitive panel, or touch-sensitive screen is widely used as an input device of a small-size information processing apparatus. Especially, in the case of handy electronic equipment such as an electronic notebook, the touch-sensitive pointing device preferably employs a simple structure. For example, a pair of transparent electrodes is provided on the display so as to sense the X-Y location of a touch. The X-Y sense output voltages of the touch-sensitive pointing device are used to determine the location of a touch.

Since such a small-size information processing apparatus can be used outdoors as well as indoor, light conditions dramatically vary depending on where it is used. Therefore, contrast adjustment of the display is an indispensable function.

There has been proposed small-size information equipment having a contrast adjusting switch for increasing and decreasing the contrast of screen in Japanese Patent Unexamined Publication No. 6-231080. The contrast adjusting switch is provided on a frame key area around the perimeter of the screen. A plurality of functions including the contrast adjustment are previously assigned to predetermined key positions on the frame key area, respectively.

In the conventional apparatus, however, the contrast adjusting switch is provided on the frame key area other than the screen area. Therefore, it is necessary that the apparatus is provided with a touch-sensitive panel larger than the screen area, resulting in increased size and weight of the apparatus.

WO 94/12971 discloses a method for adjusting brightness and contrast for a display monitor in a system with a pointing device.

JP 08 305 497 discloses a method for controlling a contrast value or the like by moving a pointing device while being required to touch the surface of a touch panel. This solution is rather suited for a continous bar-graph like sweep through a value range but not for a dot-like adjustment.

An object of the present invention is to provide a contrast control system and method which can achieve miniaturization and increased operability of an information processing apparatus.

According to the present invention, a contrast adjustment method for adjusting contrast of a display through a touch-sensitive pointing device is characterized by comprising the steps of detecting a motion direction of a touch on the touch-sensitive pointing device for a predetermined time period, determining that the motion direction of the touch is coincident with the predetermined direction when the motion direction of the touch falls into a predetermined range around the predetermined direction when the motion direction is a predetermined motion direction, adjusting the contrast of the display by one step based solely on the motion direction of the touch.

Further in an information processing apparatus having a display, a touch-sensitive pointing device provided on the display, for producing location data of a touch, it is further provided a display contrast adjuster and a processor for detecting a motion direction of the touch based on the location data for a predetermined time period and then controlling the display contrast adjuster to adjust the contrast of the display by one step based solely on the motion direction of the touch.

Since the contrast of the display is adjusted based on the motion direction and the motion range of the touch, there is no need of providing a specific key for contrast adjustment. Further, since the direction and the motion range of the touch is provided independently of where the touch starts from, the operability of the contrast adjustment is dramatically improved.
Fig. 1 is a block diagram showing the functional configuration of an information processing apparatus according to a first embodiment of the present invention;
Fig. 2 is a schematic diagram showing the screen of a touch-sensitive panel for explanation of an operation of the first embodiment;
Fig. 3 is a flowchart showing a motion direction decision routine to be executed by a microprocessor of the first embodiment;
Fig. 4 is a flowchart showing a touch-sensitive panel control routine to be executed by the microprocessor of the first embodiment;
Fig. 5 is a flowchart showing a contrast control routine to be executed by the microprocessor of the first embodiment; and
Fig. 6 is a block diagram showing the functional configuration of an information processing apparatus according to a second embodiment of the present invention.

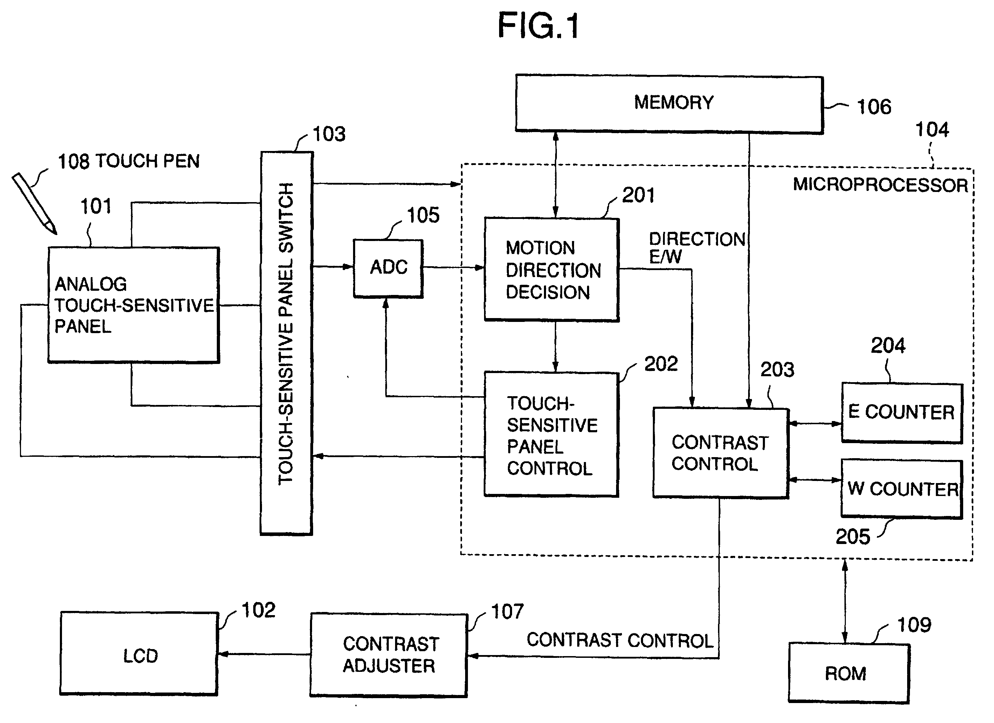

Referring to Fig. 1, an information processing apparatus in accordance with a first embodiment of the present invention is provided with an analog touch-sensitive panel (or a touch screen) 101 which is provided on a liquid-crystal display (LCD) panel 102. The analog touch-sensitive panel 101 is connected to a touch-sensitive panel switch 103 which is controlled by a microprocessor 104. Under the control of the microprocessor 104, the touch-sensitive panel switch 103 switches between X-axis and Y-axis detection connections. The detected signal is converted from analog to digital by an analog-to-digital (A-D) converter 105 and the digital data is output as the detection signal of a touch to the microprocessor 104.

The microprocessor 104 stores the touch detection signal onto a memory 106 and, as will be described later, performs contrast control based on the touch detection signal to output a contrast control signal to a contrast adjuster 107. According to the contrast control signal, the contrast adjuster 107 adjusts the contrast of the LCD 102.

The touch-sensitive panel 101 can detect a touch caused by a touch pen, a finger or the like. Hereinafter, the touch pen 108 is used for instruction input such as contrast adjustment.

The microprocessor 104 performs the contrast control by executing a contrast control program stored in a read-only memory (ROM) 109. By running the contrast control program on the microprocessor 104, as shown in Fig. 1, the following processes are generated: motion direction decision 201, touch-sensitive panel control 202 and contrast control 203 using E counter 204 and W counter 205.

The X/Y switch control of the touch-sensitive panel switch 103 is performed by the touch-sensitive panel control process 202 depending on instructions received from the motion direction decision process 201 at regular intervals. The motion direction is determined at regular intervals by the motion direction decision process 201 using X and Y touch data sequentially received from the touch-sensitive panel switch 103 through the A-D converter 105. Based on motion direction data received from the motion direction decision process 201 during a predetermined time period, the contrast control 203 changes the contrast of the LCD panel 102. The details will be described hereinafter.

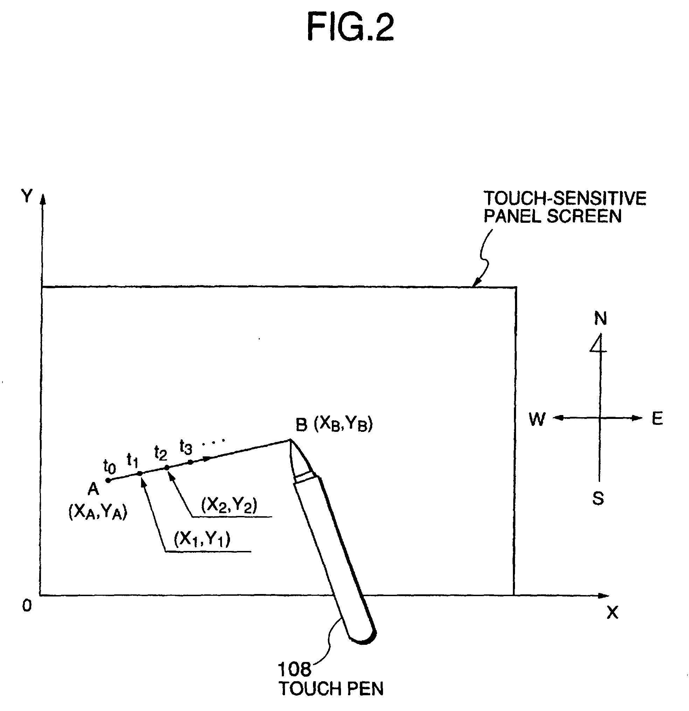

Referring to Fig. 2, any point on screen of the touch-sensitive panel 101 is represented by X and Y coordinates. For example, in the case of the touch pen 108 being moved on screen, a starting point A is (X_{A}, Y_{A}) and an endpoint B is (X_{B}, Y_{B}). Further, while moving the touch pen, the X and Y coordinates of a via point are detected at each time instant, t₁, t₂, ... , as will be described later. Hereinafter, when the touch pen 108 is moved to the right, the motion direction is indicated by "E" and, when to the left, it is indicated by "W". On the other hand, when the touch pen 108 is moved upward, it is indicated by "N" and, when downward, it is indicated by "S".

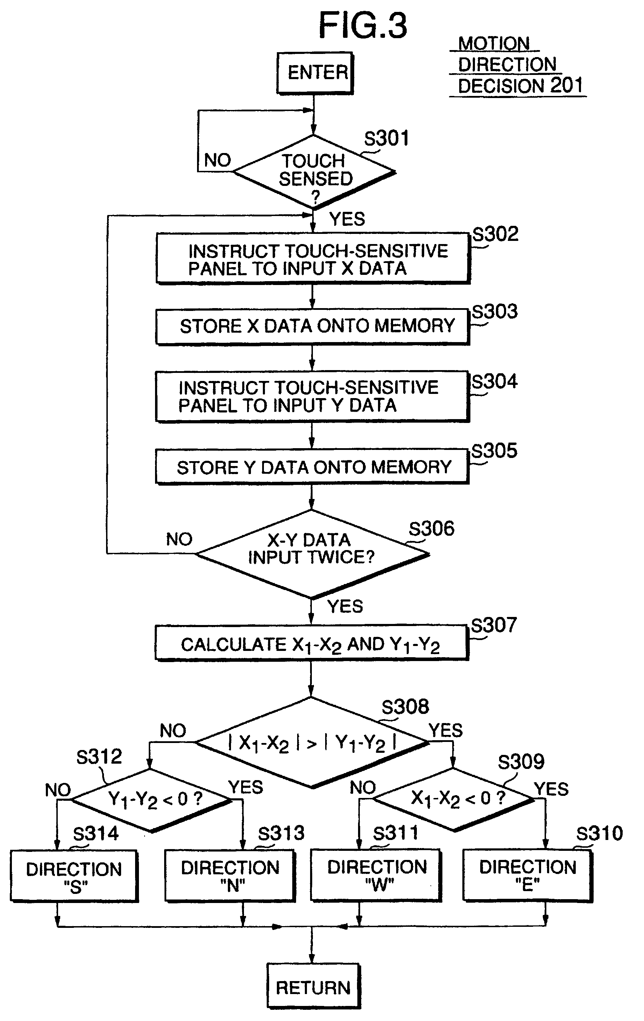

Referring to Fig. 3, the motion direction decision process 201 monitors the detection of a touch at all times (step S301). When the touch pen 108 touches the touch-sensitive panel 101 with more than predetermined threshold pressure, the touch-sensitive panel 101 produces a detection voltage. The detection voltage is converted into a digital detection signal which is output as an interruption to the microprocessor 104.

When the interruption is generated (YES in step S301), the motion direction decision process 201 instructs the touch-sensitive panel control process 202 to control the touch-sensitive panel switch 103 so that X-axis detection data is input (step S302). When receiving X-axis detection data from the touch-sensitive panel 101 through the A-D converter 105, the X-axis detection data is stored onto the memory 106 (step S303).

Subsequently, the motion direction decision process 201 instructs the touch-sensitive panel control process 202 to control the touch-sensitive panel switch 103 so that Y-axis detection data is input (step S304). When receiving Y-axis detection data from the touch-sensitive panel 101 through the A-D converter 105, the Y-axis detection data is stored onto the memory 106 (step S305).

If the X- and Y-axis detection data are the first coordinate data for a predetermined sampling period (NO in step S306), the steps S302-S305 are repeated once more. In this manner, at each sampling time instant, two pairs of X- and Y-axis detection data are stored in the memory 106. For simplicity, hereinafter, assuming that the detected X- and Y-axis detection data are a starting point (X₁, Y₁) at time instant t₁ and an endpoint (X₂, Y₂) at time instant t₂.

Subsequently, the motion direction decision process 201 calculates x coordinate difference X₁ - X₂ and Y coordinate difference Y₁ - Y₂ (step S307) and then compares the absolute value of X₁ - X₂ and that of Y₁ - Y₂ (step S 308). If |X₁ - X₂| is greater than |Y₁ - Y₂| (YES in step S308), it is determined that the touch pen 108 is moved in X direction and further checked whether X₁ - X₂ is negative (step S309). If X₁ - X₂ is negative (YES in step S309), it is determined that the touch pen 108 is moved to the direction "E" as shown in Fig. 2 (step S310) and, if X₁ - X₂ is not negative (NO in step S309), it is determined that the touch pen 108 is moved to the direction "W" (step S311).

Similarly, If |X₁ - X₂| is not greater than |Y₁ - Y₂| (NO in step S308), it is determined that the touch pen 108 is moved in Y direction and further checked whether Y₁ - Y₂ is negative (step S312). If Y₁ - Y₂ is negative (YES in step S312), it is determined that the touch pen 108 is moved to the direction "N" (step S313) and, if Y₁ - Y₂ is not negative (NO in step S312), it is determined that the touch pen 108 is moved to the direction "S" (step S314).

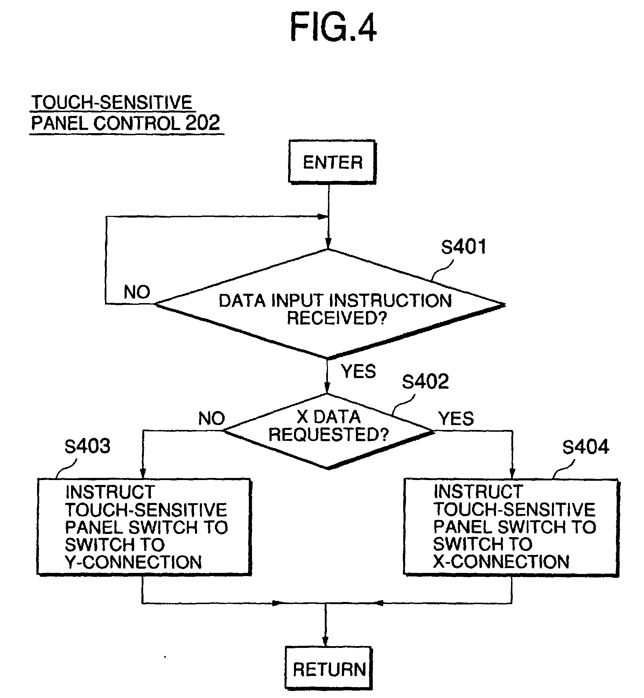

Referring to Fig. 4, when the touch-sensitive panel control process 202 receives data input instruction from the motion direction decision process 201 as described in the steps S302 and S304 of Fig. 3 (YES in step S401), it is checked whether the instruction is X data request (step S402). When it is not X data request (NO in step S402), the touch-sensitive panel control process 202 instructs the touch-sensitive panel switch 103 to switch to Y-axis detection connection (step S403). After a lapse of time period necessary for avoiding transients, the touch-sensitive panel control process 202 outputs a timing signal to the A-D converter 105. This causes a detection voltage in Y direction to be output to the microprocessor 104 through the A-D converter 105.

On the other hand, when it is X data request (YES in step S402), the touch-sensitive panel control process 202 instructs the touch-sensitive panel switch 103 to switch to X-axis detection connection (step S404). As described above, a detection voltage in X direction is output to the microprocessor 104 through the A-D converter 105.

When the motion direction is determined as described in steps S301, S311, S313 or S314 as shown in Fig. 3, the motion direction decision process 201 outputs the detected direction to the contrast control process 203.

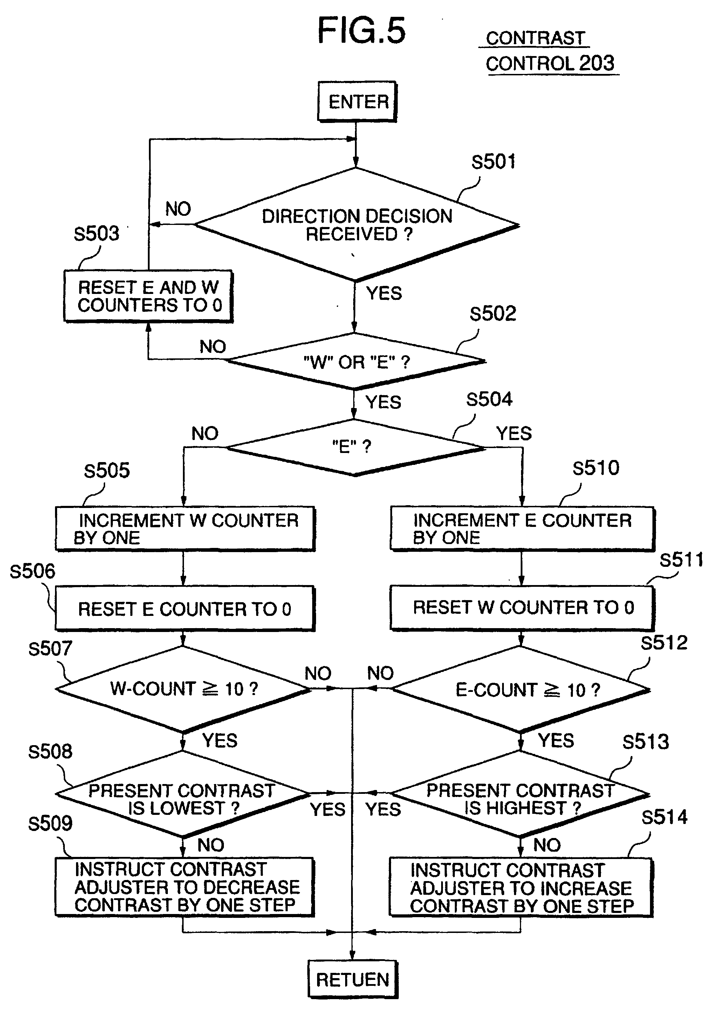

Referring to Fig. 5, when receiving the detected direction "E", "W", "N" or "S" from the motion direction decision process 201 (YES in step S501), the contrast control process 203 checks whether the received direction is "E" or "W" (step S502). If the received direction is neither "E" nor "W" (NO in step S502), the E counter 204 and the W counter 205 are both reset to 0 (step S503) and then control goes back to the step S501.

In this embodiment, only when the touch pen 108 is moved in approximate X direction (YES in step S308 of Fig. 3), the motion of the touch pen 108 can be recognized as contrast adjustment operation. If the step S502 is a step of checking whether the received direction is "N" or "S", the Y-direction motion of the touch pen 108 can be recognized as contrast adjustment operation. Hereinafter, it is assumed that the direction "E" increases and the direction "W" decreases the contrast of the LCD 102.

If the received direction is "E" or "W" (YES in step S502), it is further checked whether the received direction is "E" (step S504). When it is not "E" (NO in step S504), the contrast control process 203 increments the W counter 205 by one (step S505) and resets the E counter 204 to 0 (step S506).

Subsequently, the contrast control process 203 checks whether the W-count of the W counter 205 is equal to or greater than Nₘₐₓ (here, Nₘₐₓ=10) (step S507). If the W-count is smaller than Nₘₐₓ (NO in step S507), the contrast control process 203 does not change the contrast but waits for subsequent direction decision from the motion direction decision process 201.

If the W-count is equal to or greater than Nₘₐₓ (YES in step S507), the contrast control process 203 checks whether the present set contrast of the LCD panel 102 reaches the lowest level (step S508). If it reaches the lowest level (YES in step S508), the contrast control process 203 does not change the contrast but waits for subsequent direction decision from the motion direction decision process 201. If it does not reach the lowest level (NO in step S508), the contrast control process 203 instructs the contrast adjuster 107 to decrease the contrast of the LCD panel 102 by one step (step S509).

On the other hand, when the received direction is "E" (YES in step S504), the contrast control process 203 increments the E counter 204 by one (step S510) and resets the W counter 205 to 0 (step S511).

Subsequently, the contrast control process 203 checks whether the E-count of the E counter 204 is equal to or greater than Nₘₐₓ (here, Nₘₐₓ=10) (step S512). If the E-count is smaller than Nₘₐₓ (NO in step S512), the contrast control process 203 does not change the contrast but waits for subsequent direction decision from the motion direction decision process 201.

If the E-count is equal to or greater than Nₘₐₓ (YES in step S512), the contrast control process 203 checks whether the present set contrast of the LCD panel 102 reaches the highest level (step S513). If it reaches the highest level (YES in step S513), the contrast control process 203 does not change the contrast but waits for subsequent direction decision from the motion direction decision process 201. If it does not reach the highest level (NO in step S513), the contrast control process 203 instructs the contrast adjuster 107 to increase the contrast of the LCD panel 102 by one step (step S514).

Therefore, when the touch pen 108 is moved in the W direction for Nₘₐₓ (here 10) successive times, the contrast of the LCD panel 102 is decreased by one step unless it reaches the lowest level (step S509). Contrarily, when the touch pen 108 is moved in the E direction for Nₘₐₓ (here 10) successive times, the contrast of the LCD panel 102 is increased by one step unless it reaches the highest level (step S514). In the case where the touch pen 108 is moved in the E or W direction for 8 successive times but is moved in the Y direction at the ninth time, the contrast of the LCD panel 102 is not changed (NO in steps S507 and S512 and NO in step S502).

In the case as shown in Fig. 2, the motion direction of the touch pen 108 is determined at each time instant, t₁, t₂, ... . Therefore, if the touch pen 108 continues to be moved in the E direction for time period from t0 to t10, the contrast of the LCD panel 102 is increased by one step unless it reaches the highest level (step S514).

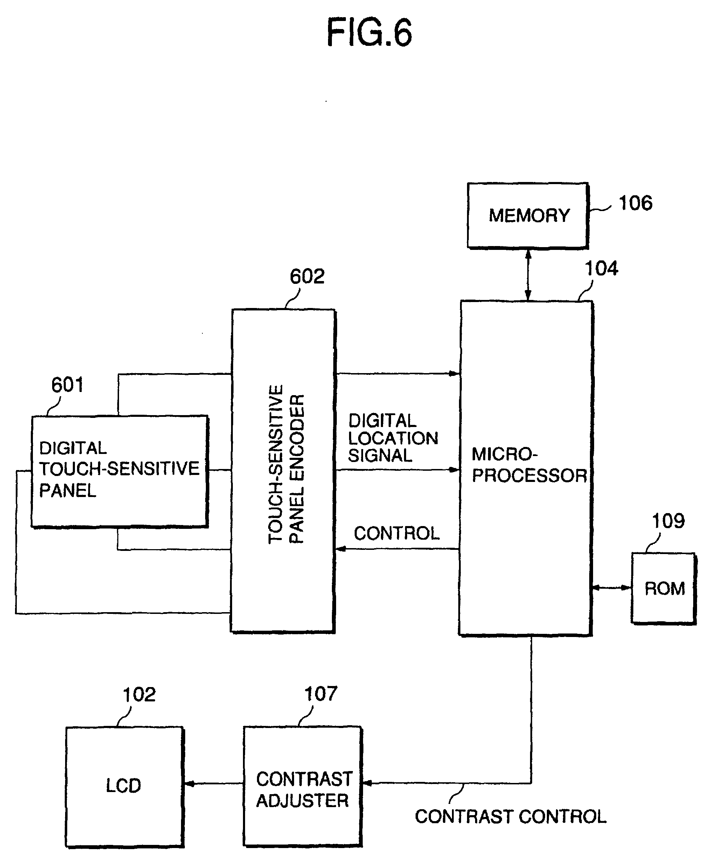

Referring to Fig. 6, an information processing apparatus in accordance with a second embodiment of the present invention is provided with a digital touch-sensitive panel 601 which is provided on the LCD panel 102. The LCD panel 102 displays key graphic images and other necessary information under the control of the microprocessor 104. The digital touch-sensitive panel 601 is connected to a touch-sensitive panel encoder 602 which scans the digital touch-sensitive panel 601 to detect the location of a touch under the control of the touch-sensitive panel control process 202 of the microprocessor 104. The detected location digital signal is directly output to the motion direction decision process 201 of the microprocessor 104.

Since the motion direction decision process 201, the touch-sensitive panel control 202 and the contrast control process 203 are basically the same as those in the first embodiment as shown in Fig. 1, the detail descriptions are omitted.

As described above, the contrast of the LCD panel 102 is adjusted depending on the travel range and direction of a touch on the touch-sensitive panel during a predetermined time period. Since the contrast adjustment is performed independently of the position of a touch on the touch-sensitive panel, the reliable contrast adjustment can be easily achieved.

## Claims

1. A contrast adjustment method for adjusting contrast of a display (102) through a touch-sensitive pointing device (101), **characterized by** comprising the steps of:
detecting a motion direction of a touch on the touch-sensitive pointing device for a predetermined time period;
determining that the motion direction of the touch is coincident with the predetermined direction when the motion direction of the touch falls into a predetermined range around the predetermined direction;
when the motion direction is a predetermined motion direction, adjusting the contrast of the display by one step based solely on the motion direction of the touch.

2. The contrast adjustment method according to claim 1, **characterized in that** said contrast of the display is changed based solely on the motion direction and the motion range of the touch independently of where the touch starts from.

3. A contrast adjustment method according to claim 1 **characterized in that** in said step of detecting a motion direction said motion direction is determined at predetermined time intervals; and
in said step of adjusting the contrast of the display said contrast is adjusted when each of motion directions of the touch moving during a predetermined time period is consecutively coincident with a predetermined direction.

4. The contrast adjustment method according to claim 3, **characterized in that** said step of detecting a motion direction comprises:
detecting a starting point and an endpoint of the touch for each predetermined time interval; and
determining the motion direction of the touch based on the starting point and the endpoints, and
said step of adjusting the contrast of the display comprises:
checking whether the motion direction of the touch is coincident with the predetermined direction for each predetermined time interval within the predetermined time period; and
adjusting the contrast of the display when the motion direction of the touch is consecutively coincident with the predetermined direction for the predetermined time period.

5. The contrast adjustment method according to claim 3, **characterized in that** said step of detecting a motion direction comprises:
detecting a starting point and an endpoint of the touch for each predetermined time interval; and
determining the motion direction of the touch based on the starting point and the endpoints, and
said step of adjusting the contrast of the display comprises:
counting a number of times the motion direction of the touch is consecutively coincident with the predetermined direction for each predetermined time interval; and
adjusting the contrast of the display when the number of times reaches a predetermined count.

6. The contrast adjustment method according to any of claims 3-5, **characterized in that** in said step of adjusting the contrast of the display it is determined that the motion direction of the touch is coincident with the predetermined direction when the motion direction of the touch falls into a predetermined range around the predetermined direction.

7. An information processing apparatus comprising:
a display (102);
a touch-sensitive pointing device (101) provided on the display, for producing location data of a touch;
a display contrast adjuster (107); and
a processor (104) for detecting a motion direction of the touch based on the location data for a predetermined time period and then controlling the display contrast adjuster to adjust the contrast of the display by one step based solely on the motion direction of the touch.

8. The information processing apparatus according to claim 7, wherein the processor comprises:
a direction determiner (201) for determining a motion direction of a touch on the touch-sensitive pointing device at predetermined time intervals; and a contrast controller (203) for controlling the display contrast adjuster to adjust the contrast of the display when each of motion directions of the touch moving during a predetermined time period is consecutively coincident with a predetermined direction.

9. The information processing apparatus according to claim 8, wherein the direction determineration comprises:
a point detector for detecting a starting point and an endpoint of the touch for each predetermined time interval; and a determiner for determining the motion direction of the touch based on the starting point and the endpoints, and the contrast controller comprises:
a checker for checking whether the motion direction of the touch is coincident with the predetermined direction for each predetermined time interval within the predetermined time period; and
a controller for controlling the display contrast adjuster to adjust the contrast of the display when the motion direction of the touch is consecutively coincident with the predetermined direction for the predetermined time period.

## Patentansprüche

1. Kontrast-Einstellverfahren zum Einstellen des Kontrasts einer Anzeige (102) mit Hilfe einer berührungsempfindlichen Zeigervorrichtung (101), wobei das Verfahren die folgenden Schritte aufweist:
das Erfassen einer Bewegungsrichtung einer Berührung auf der berührungsempfindlichen Zeigervorrichtung über eine vorgegebene Zeitdauer;
das Bestimmen, dass die Bewegungsrichtung der Berührung mit der vorbestimmten Richtung übereinstimmt, wenn die Bewegungsrichtung der Berührung in einem vorgegebenen Bereich in etwa der vorbestimmten Richtung liegt;
das Einstellen des Kontrasts der Anzeige lediglich auf der Basis der Bewegungsrichtung der Berührung in einem Schritt, wenn die Bewegungsrichtung eine vorbestimmte Bewegungsrichtung ist.

2. Kontrast-Einstellverfahren nach Anspruch 1, **dadurch gekennzeichnet, dass** der Kontrast der Anzeige lediglich auf der Basis der Bewegungsrichtung und der Bewegungsreichweite der Berührung unabhängig vom Ausgangspunkt der Berührung verändert wird.

3. Kontrast-Einstellverfahren nach Anspruch 1, **dadurch gekennzeichnet, dass** bei dem Schritt der Erfassung einer Bewegungsrichtung die Bewegungsrichtung in vorbestimmten Zeitintervallen bestimmt wird; und
bei dem Schritt der Einstellung des Kontrasts der Anzeige der Konstrast dann eingestellt wird, wenn alle Bewegungsrichtungen der Berührung, welche sich während einer vorbestimmten Zeitdauer bewegt, fortlaufend mit einer vorbestimmten Richtung übereinstimmen.

4. Kontrast-Einstellverfahren nach Anspruch 3, **dadurch gekennzeichnet, dass** der Schritt der Erfassung einer Bewegungsrichtung Folgendes aufweist:
das Erfassen eines Ausgangspunkts und eines Endpunkts der Berührung für jedes vorbestimmte Zeitintervall; und
das Bestimmen der Bewegungsrichtung der Berührung basierend auf den Ausgangspunkten und den Endpunkten, und
wobei der Schritt der Einstellung des Kontrasts der Anzeige Folgendes aufweist:
das Überprüfen, ob die Bewegungsrichtung der Berührung für jedes vorbestimmte Zeitintervall innerhalb der vorbestimmten Zeitdauer mit der vorbestimmten Richtung übereinstimmt; und
das Einstellen des Kontrast der Anzeige, wenn die Bewegungsrichtung der Berührung für die vorbestimmte Zeitdauer fortlaufend mit der vorbestimmten Richtung übereinstimmt.

5. Kontrast-Einstellverfahren nach Anspruch 3, **dadurch gekennzeichnet, dass** der Schritt der Erfassung einer Bewegungsrichtung Folgendes aufweist:
das Erfassen eines Anfangspunkts und eines Endpunkts der Berührung für jedes vorbestimmte Zeitintervall; und
das Bestimmen der Bewegungsrichtung der Berührung auf der Basis des Anfangs- und des Endpunkts, und
wobei der Schritt der Einstellung des Kontasts der Anzeige Folgendes aufweist:
das Zählen, wie viele Male die Bewegungsrichtung der Berührung fortlaufend mit der vorbestimmten Richtung für jedes vorbestimmte Zeitintervall übereinstimmt; und
das Einstellen des Kontrasts der Anzeige, wenn die Anzahl von Malen einen vorbestimmten Zählwert erreicht.

6. Kontrast-Einstellverfahren nach einem der Ansprüche 3 bis 5, **dadurch gekennzeichnet, dass** in dem Schritt der Einstellung des Kontrasts der Anzeige bestimmt wird, dass die Bewegungsrichtung der Berührung mit der vorbestimmten Richtung übereinstimmt, wenn die Bewegungsrichtung der Berührung in einen vorbestimmten Bereich der vorbestimmten Richtung liegt.

7. Datenverarbeitungsgerät, welches Folgendes aufweist:
eine Anzeige (102);
eine auf der Anzeige vorgesehene berührungsempfindliche Zeigervorrichtung (101) zum Erzeugen von Positionsdaten einer Berührung;
eine Anzeigekontrast-Einstellvorrichtung (107); und
einen Prozessor (104) zum Erfassen einer Bewegungsrichtung der Berührung auf der Basis der Positionsdaten für eine vorbestimmte Zeitdauer und zum anschließenden Steuern der Anzeigekonstrast-Einstellvorrichtung, damit diese den Kontrast der Anzeige lediglich auf der Basis der Bewegungsrichtung der Berührung in einem Schritt einstellt.

8. Datenverarbeitungsgerät nach Anspruch 7, **dadurch gekennzeichnet, dass** der Prozessor Folgendes aufweist:
eine Richtungs-Bestimmungsvorrichtung (201) zum Bestimmen einer Bewegungsrichtung einer Berührung auf der berührungsempfindlichen Zeigervorrichtung in bestimmten Zeitintervallen; und eine Kontrast-Steuereinrichtung (203) zum Steuern der Anzeigekontrast-Einstellvorrichtung, damit diese den Kontrast der Anzeige einstellt, wenn alle Bewegungsrichtungen der Berührung, die sich während einer vorbestimmten Zeitdauer bewegt, fortlaufend mit einer vorbestimmten Richtung übereinstimmen.

9. Datenverarbeitungsgerät nach Anspruch 8, **dadurch gekennzeichnet, dass** die Richtungs-Bestimmungsvorrichtung Folgendes aufweist:
eine Punkterfassungsvorrichtung zum Erfassen eines Anfangspunkts und eines Endpunkts der Berührung für jedes vorbestimmte Zeitintervall; und eine Bestimmungsvorrichtung zum Bestimmen der Bewegungsrichtung der Berührung auf der Basis des Anfangspunkts und des Endpunkts, und wobei die Kontrast-Steuereinrichtung Folgendes aufweist:
eine Überprüfungsvorrichtung zum Überprüfen, ob die Bewegungsrichtung der Berührung für jedes vorbestimmte Zeitintervall innerhalb der vorbestimmten Zeitdauer mit der vorbestimmten Richtung übereinstimmt; und
eine Steuereinrichtung zum Steuern der Anzeigekonstrast-Einstellvorrichtung, damit diese den Kontrast der Anzeige einstellt, wenn die Bewegungsrichtung der Berührung für die vorbestimmte Zeitdauerfortlaufend mit der vorbestimmten Richtung übereinstimmt.

## Revendications

1. Procédé de réglage de contraste pour régler le contraste d'un afficheur (102) par un dispositif de pointage à effleurement (101), **caractérisé en ce qu'**il comprend les étapes consistant à :
détecter un sens de déplacement d'un contact sur le dispositif de pointage à effleurement pendant une période de temps prédéterminée ;
déterminer que le sens de déplacement du contact coïncide avec le sens prédéterminé quand le sens de déplacement du contact tombe dans une plage prédéterminée autour du sens prédéterminé ;
quand le sens de déplacement est un sens de déplacement prédéterminé, régler le contraste de l'afficheur d'un cran seulement sur la base du sens de déplacement du contact.

2. Procédé de réglage de contraste selon la revendication 1, **caractérisé en ce que** ledit contraste de l'afficheur est modifié seulement sur la base du sens de déplacement et de la plage de déplacement du contact indépendamment d'où le contact commence.

3. Procédé de réglage de contraste selon la revendication 1, **caractérisé en ce que** dans ladite étape de détection d'un sens de déplacement, ledit sens de déplacement est déterminé à des intervalles de temps prédéterminés ; et
dans ladite étape de réglage de contraste de l'afficheur, ledit contraste est réglé quand chacun des sens de déplacement du contact se déplaçant pendant une période de temps prédéterminée coïncide de manière consécutive avec un sens prédéterminé.

4. Procédé de réglage de contraste selon la revendication 3, **caractérisé en ce que** ladite étape de détection d'un sens de déplacement comprend :
la détection d'un point de départ et d'un point de fin du contact pour chaque intervalle de temps prédéterminé ; et
la détermination du sens de déplacement du contact sur la base du point de départ et des points de fin, et
ladite étape de réglage de contraste de l'afficheur comprend :
la vérification si le sens de déplacement du contact coïncide avec le sens prédéterminé pour chaque intervalle de temps prédéterminé à l'intérieur de la période de temps prédéterminée ; et
le réglage du contraste de l'afficheur lorsque le sens de déplacement du contact coïncide de manière consécutive avec le sens prédéterminé pendant la période de temps prédéterminée.

5. Procédé de réglage de contraste selon la revendication 3, **caractérisé en ce que** ladite étape de détection d'un sens de déplacement comprend :
la détection d'un point de départ et d'un point de fin du contact pour chaque intervalle de temps prédéterminé ; et
la détermination du sens de déplacement du contact sur la base du point de départ et des points de fin, et
ladite étape de réglage de contraste de l'afficheur comprend :
le comptage du nombre de fois que le sens de déplacement du contact coïncide de manière consécutive avec le sens prédéterminé pour chaque intervalle de temps prédéterminé ; et
le réglage du contraste de l'afficheur quand le nombre de fois atteint une valeur prédéterminée.

6. Procédé de réglage de contraste selon l'une quelconque des revendications 3 à 5, **caractérisé en ce que** dans ladite étape de réglage du contraste de l'afficheur, on détermine que le sens de déplacement du contact coïncide avec le sens prédéterminé quand le sens de déplacement du contact tombe dans une plage prédéterminée autour du sens prédéterminé.

7. Appareil de traitement de l'information comprenant :
un afficheur (102) ;
un dispositif de pointage à effleurement (101) disposé sur l'afficheur, pour produire des données d'emplacement d'un contact ;
un dispositif de réglage de contraste d'afficheur (107) ; et
un processeur (104) pour détecter un sens de déplacement du contact sur la base des données d'emplacement pendant une période de temps prédéterminée et pour commander ensuite le dispositif de réglage de contraste d'afficheur pour régler le contraste de l'afficheur d'un cran seulement sur la base du sens de déplacement du contact.

8. Appareil de traitement de l'information selon la revendication 7, dans lequel le processeur comprend :
un dispositif de détermination de sens (201) pour déterminer un sens de déplacement d'un contact sur le dispositif de pointage à effleurement à des intervalles de temps prédéterminés ; et une unité de commande de contraste (203) pour commander le dispositif de réglage de contraste d'afficheur pour régler le contraste de l'afficheur quand chacun des sens de déplacement du contact se déplaçant pendant une période de temps prédéterminée coïncide de manière consécutive avec un sens prédéterminé.

9. Appareil de traitement de l'information selon la revendication 8, dans lequel la détermination de sens comprend :
un détecteur de point pour détecter un point de départ et un point de fin du contact pour chaque intervalle de temps prédéterminé ; et un dispositif de détermination pour déterminer le sens de déplacement du contact sur la base du point de départ et des points de fin, et l'unité de commande de contraste comprend :
un contrôleur pour vérifier si le sens de déplacement du contact coïncide avec le sens prédéterminé pour chaque intervalle de temps prédéterminé à l'intérieur de la période de temps prédéterminée ; et
une unité de commande pour commander le dispositif de réglage de contraste d'afficheur pour régler le contraste de l'afficheur quand le sens de déplacement du contact coïncide de manière consécutive avec le sens prédéterminé pendant la période de temps prédéterminée.
